# FASCICULE DE BREVET EUROPEEN

(11) **EP 2 079 609 B1**
(45) Date de publication et mention de la délivrance du brevet: **29.12.2010**
(21) Numéro de dépôt: 07866514.8
(22) Date de dépôt: 29.10.2007
(51) Int. Cl.: B60R 11/02, H04R 1/02

(54) **SOUS ENSEMBLE DE VEHICULE AUTOMOBILE POUR FIXATION DE GRILLE D'HABILLAGE**
KRAFTFAHRZEUGUNTERBAUGRUPPE ZUR BEFESTIGUNG EINES AUSSTATTUNGSGITTERS
AUTOMOBILE VEHICLE SUBASSEMBLY FOR SECURING A FITTINGS GRID

(30) Priorité: 15.11.2006 FR 0654915
(43) Date de publication de la demande: 22.07.2009
(73) Titulaire: Renault S.A.S., 92100 Boulogne-Billancourt (FR)
(72) Inventeur: DAGOREAU, Alain, 92250 La Garenne Colombes (FR)
(86) Numéro de dépôt international: PCT/FR2007/052272
(87) Numéro de publication internationale: WO 2008/059151

(56) Documents cités:
- EP-A- 1 718 100
- US-A- 5 416 283
- US-A- 5 652 413

## Description

La présente invention se rapporte à un sous-ensemble de fixation de grille de haut-parleur d'habillage intérieur de véhicule, le sous-ensemble comportant une paroi de coiffe qui délimite un logement de haut-parleur, et une grille recouvrant le logement comprenant des moyens principaux de fixation élastiques coopérant avec la paroi de la coiffe.

Traditionnellement, un véhicule automobile est équipé d'une planche de bord avec une coiffe supérieure visible de ses occupants. Dans certains véhicules, des haut-parleurs de petit diamètre, par exemple de diamètre 30 mm, couramment appelés tweeters permettent de restituer les fréquences élevées, les «aigus» du système audio du véhicule, L'emplacement de choix de ces petits haut-parleurs se trouve dans la coiffe à proximité du pare-brise, prés des montants latéraux dé manière à ce que les « aigus » puissent se propager presque idéalement dans la partie haute de l'habitacle en se réfléchissant sur le pare-brise.

Cependant, cette légion de la coiffe peut être sujette à des déformations, par exemple lors d'un choc violent, en raison du choc en lui-même mais également en raison du déclenchement des moyens pyrotechniques actionnant les coussins gonflables de sécurité. Ceci n'est pas sans poser des problèmes de tenue de la grille qui recouvre le haut-parleur qui peut se détacher de la coiffe et être projetée dans l'habitacle, au détriment éventuel de la sécurité des occupants.

Un sous-ensemble comprenant des moyens secondaires de retenue anti-éjection est connu par le document EP-A-1718100.

L'invention vise à améliorer un tel sous-ensemble.

A cet effet, l'invention a pour objet un sous ensemble de fixation de grille de haut-parleur d'habillage intérieur de véhicule du type précité, conforme à la revendication 1 annexée.

Suivant des modes particuliers de réalisation, le sous-ensemble de fixation comporte l'une ou plusieurs des caractéristiques suivantes :
- les moyens principaux de fixation élastiques sont des organes d'encliquetage s'accrochant sur la première partie du logement, ce qui permet un accrochage dans une partie souple de la planche de bord qui limite les bruits et couinements ;
- les organes mâles et femelles d'accrochage des moyens secondaires de retenue sont en nombre pair et disposés symétriquement autour d'un axe de symétrie de la grille constitué par un diamètre de la grille, ce qui peut permettre à une seule et même griffe de pouvoir être indifféremment adaptée aux deux extrémités latérales de la planche de bord;

Selon l'invention, du fait qu'un élément de structure de la coiffe est la paroi de fond du logement, et que dans une position normale d'utilisation, les crochets d'extrémité des organes mâles d'accrochage sont à distance de l'orifice, sous ce dernier, et dans une position de travail des organes mâles d'accrochage. dans laquelle les moyens principaux de fixation élastiques sont décrochés de la paroi de coiffe, les crochets d'extrémité coopérant avec la paroi de fond de logement périphérie de l'orifice, ce qui permet de limiter les bruits et couinements venant de la coopération de ces moyens secondaires de retenue avec une partie dure de la planche de bord.

Selon l'invention les moyens de fixation élastiques coopèrent avec au moins un épaulement formé sur la circonférence d'une partie supérieure du logement qui est la première partie, ce qui permet d'avoir un pouvoir de fixation accrue sur la coiffe.

L'invention a aussi pour objet un véhicule automobile comportant un sous-ensemble selon l'invention, le sous-ensemble étant un sous-ensemble assurant la tenue de la grille sur la coiffe même lors de la déformation de la première partie de cette dernière lors d'un choc avec déploiement du coussin gonflable de sécurité.

D'autres caractéristiques et avantages de l'invention apparaîtront clairement à la lecture de la description détaillée d'un mode de réalisation pris à titre d'exemple nullement limitatif, et illustré par les dessins annexés, sur lesquels :

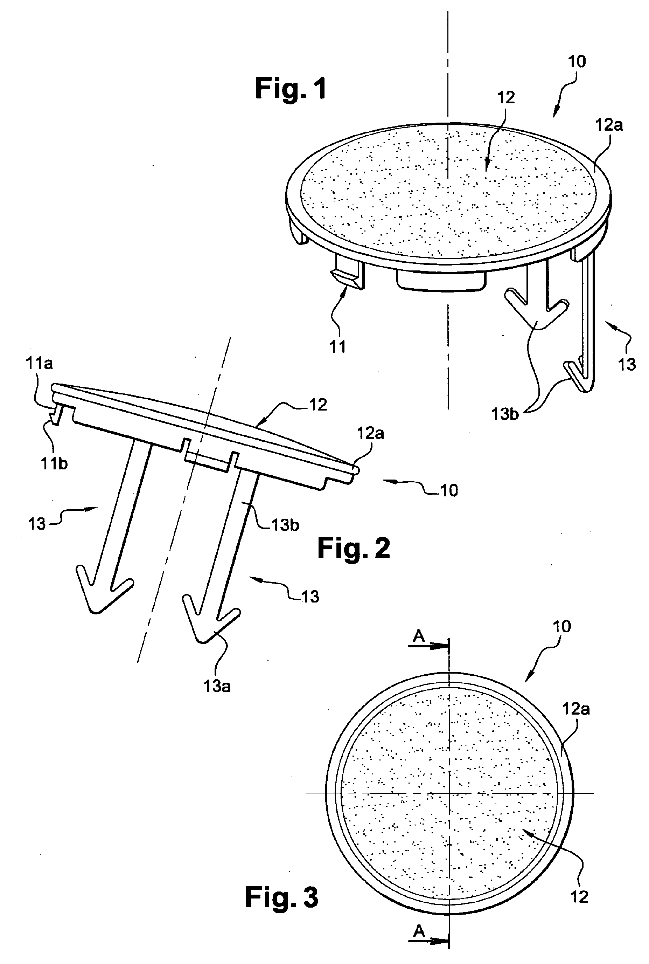

- la figure 1 est une vue en perspective de la grille de haut parleur selon l'invention;
- la figure 2 est une vue de côté de la grille de haut-parleur selon l'invention;
- la figure 3 est une vue de dessus de la grille de haut-parleur selon l'invention;
- la figure 4 est une section de la grille de haut parleur dans le sous-ensemble selon l'invention au niveau du plan A-A de la figure.

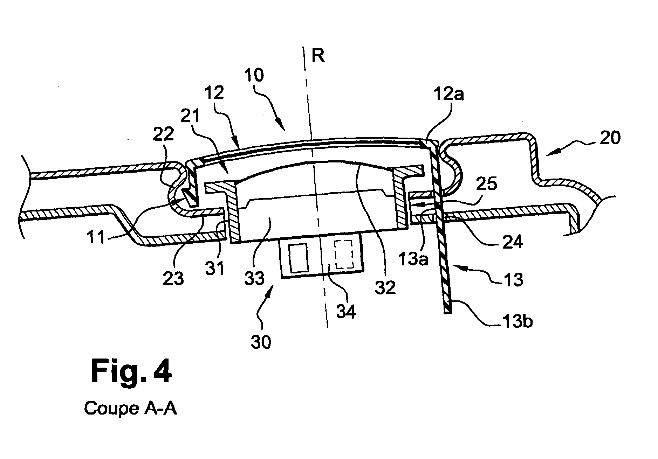

Les trois premières figures, 1, 2 et 3 présentent la grille 10 seule avant montage sur une coiffe de tableau de bord 20 sous de multiples vues. La figure 4 présente en section, la grille 10 en place sur la coiffe de tableau de bord 20 en recouvrant un haut-parleur 30.

Le haut-parleur 30 comprend un boîtier 31 qui supporte généralement une membrane 32, un électro-aimant 33 et un connecteur 34. Ce boîtier 31 est lui-même monté dans un lamage 23 dans la partie inférieure d'un logement 21 de la coiffe 20, entre une peau externe de la coiffe 20 et une paroi de structure. Le boîtier comporte des moyens de fixation sur la coiffe de tableau de bord 20, non représentés.

Le haut-parleur 30 doit pouvoir être installé dans la partie supérieure de la coiffe 20, donc la partie supérieure du logement 21. Le logement 21 est sensiblement cylindrique, et présente un diamètre supérieur au diamètre du haut-parleur 30.

Selon l'invention, la grille 10 comporte des moyens principaux de fixation de la grille 10 sur la coiffe 20. La paroi 25 à la périphérie du logement 21 présente un profil particulier dans le sens de la profondeur de la coiffe 20, pour dans sa partie supérieure, coopérer avec les moyens principaux de fixation de la grille 10. Ces moyens comportent des pattes élastiques 11 sur un anneau périphérique 12a d'un grillage 12 de la grille 10. Chaque patte 11 comprend un bras 11a, raccordé à une extrémité à l'anneau, au bout duquel est située une partie d'extrémité 11 b adaptée à venir en contact avec la paroi 25. Cette partie d'extrémité 11b est plaquée contre la paroi 25 sous l'effet du rappel élastique des pattes 11 qui sont déformées vers l'axe de révolution R du grillage 12 lorsqu'elles sont en place dans le logement 21.

Pour compléter la fixation au-delà du seul plaquage élastique des pattes 11 contre la paroi périphérique 25, un épaulement 22 est réalisé au moins sur une portion de la périphérie du logement 21. La partie d'extrémité des pattes 11b présente alors une surface apte à s'engager sous cet épaulement 22 pour renforcer la fixation et s'opposer à l'extraction de la grille 10 du logement 21. Ceci induit que les pattes 11 doivent pouvoir se déformer de manière à pouvoir passer à l'intérieur du diamètre plus petit, formé par l'épaulement 22 sur la périphérie supérieure du logement 21.

En cas de choc, par exemple lors du déploiement des coussins gonflables de sécurité disposés dans la coiffe 20, le logement 21 peut se déformer, en particulier, lors de grandes chaleurs quand la planche de bord est restée plusieurs heures au soleil et que sa matière, en surface, à 70°C est moins rigide qu'à 20°C. Les moyens principaux de fixations peuvent dans certains cas être insuffisants pour éviter l'éjection de la grille 10 hors du logement 21.

Selon l'invention, des moyens secondaires de retenue sont prévus pour s'assurer que la grille 10 ne puisse pas sortir du logement 21. Ces moyens secondaires de retenue coopèrent avec une partie inférieure de la paroi périphérique 25 sur une paroi de structure de la planche de bord, en complément des moyens principaux de fixation ci-dessus décrits. Dans la paroi de structure, au fond du logement 21, est formé le lamage 23 sur lequel prend appui le boîtier 31 de haut-parleur. Dans la paroi de fond de logement 21, à proximité du lamage 23, est réalisé au moins un orifice traversant 24 dans lequel se glissent les moyens secondaires de retenue. Ces moyens secondaires de retenue sont formés de la coopération de l'orifice traversant 24 avec des harpons 13. Les harpons 13 constituent un exemple selon ce mode de réalisation des organes mâles d'accrochage des moyens secondaires de retenue et l'orifice 24 un exemple des organes femelles d'accrochage.

Selon le mode de réalisation représenté sur les figures, des moyens de retenue se présentent sous la forme d'une tige 13a raccordés à l'anneau 12a à une extrémité. La tige 13a est apte à s'engager dans l'orifice 24. Sur une deuxième partie d'extrémité libre, les harpons 13 se présentent sous la forme de crochets élastiques 13b présentant aux repos en l'absence de toute compression, des dimensions plus grandes que l'orifice 24.

Ces crochets 13b doivent alors pouvoir se déformer en se rabattant le long de la tige 13a lors de l'engagement des harpons 13 dans l'orifice 24 de façon élastique de manière à pouvoir revenir à leur position de repos initiale. Si ces crochets 13b doivent pouvoir se déformer pour se mettre le long de la tige 13a, ces mêmes crochets 13b doivent aussi être suffisamment robustes pour pouvoir retenir la grille 10 pour éviter son éjection. Lors de la déformation élastique des crochets 13b qui se produit au moment de l'éjection, leurs dimensions doivent rester supérieures aux dimensions de l'orifice 24, sans se casser. Ceci impose de trouver un compromis entre l'élasticité recherchée pour l'engagement de ces moyens 13 dans l'orifice 24 et la raideur que ces moyens 13 doivent présenter pour s'opposer à l'éjection des grilles 10 hors de la coiffe 20.

On peut aussi former des lignes de pliage sur la partie faisant l'interface entre la tige 13a et les crochets 13b pour faciliter leur déformation vers la tige 13a au moment de l'engagement dans l'orifice 24.

Selon le mode de réalisation représenté, la grille 10 présente deux harpons 13, symétriques l'un par rapport à l'autre par rapport à un diamètre du grillage 12. Si la présence de deux harpons 13 peut permettre d'augmenter la sécurité, elle peut aussi permettre d'utiliser la même grille 10 à chaque extrémité latérale de la coiffe 20 dans le véhicule, tout en conservant un moyen de réalisation du logement 21 unique pour les deux bord latéraux de la coiffe 24.

Les moyens de fixation 11 et les moyens de retenue 13 de la grille 10 sur la coiffe 20 et les moyens de fixation du boîtier 31 de haut-parleur 30 sur la coiffe 20 sont distincts et indépendants. Ceci se révèle particulièrement avantageux car dans une même gamme de véhicules, certains modèles comportent un tweeter et d'autres modèles ne comportent pas de tweeter. Ce système peut alors être unique pour plusieurs versions d'un même véhicule.

Un dispositif de fixation pour grille de protection selon l'invention est donc particulièrement avantageux en recourant à des moyens secondaires de retenue coopérant avec une partie dure de la planche de bord lorsque les moyens principaux de fixation qui coopèrent avec une partie souple de la planche de bord, coopération qui a l'avantage de ne pas induire de bruits ou de couinements, ne se sont pas révélés suffisamment efficace pour retenir la grille de protection.

## Revendications

1. Sous-ensemble de fixation de grille (10) de haut-parleur (30) d'habillage intérieur sur une planche de bord de véhicule, le sous-ensemble comportant une paroi (25) de coiffe (20) qui délimite un logement (21) de haut-parleur (30), et une grille (10) recouvrant le logement (21) comprenant des moyens principaux de fixation élastiques (11) formés sur un anneau (12a) à la périphérie d'un grillage (12) de la grille (10) et coopérant avec la paroi (25) de la coiffe (20), les moyens principaux de fixation élastiques (11) coopérant avec au moins un épaulement (22) formé sur la circonférence d'une partie supérieure du logement (21), le sous-ensemble comportant des moyens secondaires de retenue qui comprennent au moins un orifice d'accrochage (24) dans lequel s'engage au moins un organe mâle d'accrochage (13), les organes mâles d'accrochage (13) des moyens secondaires de retenue comprenant une tige (13a) au bout de laquelle est formée une partie élastique (13b) repliable lors de l'insertion de l'organe mâle d'accrochage (13) dans l'orifice (24), **caractérisé en ce qu'**un élément de structure de la coiffe (20) est une paroi de fond du logement, (21), **en ce que** l'au moins un orifice d'accrochage (24) est réalisé dans ladite paroi de fond de logement (21), **en ce que** dans une position normale d'utitisation, les crochets d'extrémité (13b) des organes mâles d'accrochage (13) sont à distance de l'orifice (24), sous ce dernier, et **en ce que** dans une position de travail des organes mâles d'accrochage (13), dans laquelle les moyens principaux de fixation élastiques (11) sont décrochés de la paroi (25) de coiffe (20), les crochets d'extrémité (13b) coopèrent avec la paroi de fond de logement (21) à périphérie de l'orifice (24).

2. Sous-ensemble selon la revendication 1, **caractérisé en ce que** les moyens principaux de fixation (11) coopèrent avec une partie souple de planche de bord et les moyens secondaires de retenue coopèrent avec une partie dure de planche de bord.

3. Sous-ensemble selon l'une des revendications 1 ou 2 **caractérisé en ce que** les moyens principaux de fixation élastiques (11) sont des organes d'encliquetage s'accrochant sur ladite partie supérieure du logement (21).

4. Sous-ensemble selon l'une des revendications 1 à 3 **caractérisé en ce que** les organes mâle (13) et l'orifice (24) d'accrochage des moyens secondaires de retenue sont en nombre pair et disposés symétriquement autour d'un axe due symétrie de la griffe (10) constitué par un diamètre de la grille (10).

5. Véhiculé automobile **caractérisé en ce qu'**il comporte un sous-ensemble selon l'une quelconque des revendications précédentes, le sous-ensemble étant un sous-ensemble assurant la tenue de la grille (10) sur la coiffe (20) même lors de la déformation de la première partie de cette dernière lors d'un choc avec déploiement du coussin gonflable de sécurité.

## Claims

1. Subassembly for attaching a grille (10) of a loudspeaker (30) for an interior fitting on a dashboard of a vehicle, the subassembly comprising a wall (25) of a cover (20) which delimits a housing (21) of a loudspeaker (30) and a grille (10) covering the housing (21) comprising main elastic fastening means (11) formed on a ring (12a) at the periphery of a mesh (12) of the grille (10) and interacting with the wall (25) of the cover (20), the main elastic fastening means (11) interacting with at least one shoulder (22) formed on the circumference of an upper portion of the housing (21), the subassembly comprising secondary retention means which comprise at least one coupling orifice (24) into which at least one male coupling member (13) engages, the male coupling members (13) of the secondary retention means comprising a stem (13a) at the end of which is formed an elastic portion (13b) that can bend during the insertion of the male coupling member (13) into the orifice (24), **characterized in that** a structural element of the cover (20) is a back wall of the housing (21), **in that** the at least one coupling orifice (24) is produced in said backwall of the housing (21), **in that**, in a normal position of use, the end hooks (13b) of the male coupling members (13) are at a distance from the orifice (24), beneath the latter, and **in that**, in a working position of the male coupling members (13), in which the main elastic fastening means (11) are unhooked from the wall (25) of the cover (20), the end hooks (13b) interact with the back wall of the housing (21) at the periphery of the orifice (24).

2. Subassembly according to Claim 1, **characterized in that** the main fastening means (11) interact with a flexible portion of dashboard and the secondary retention means interact with a hard portion of dashboard.

3. Subassembly according to either of Claims 1 and 2, **characterized in that** the main elastic fastening means (11) are snap-fitting members being coupled to said upper portion of the housing (21).

4. Subassembly according to one of Claims 1 to 3, **characterized in that** the male coupling members (13) and the coupling orifice (24) of the secondary retention means are even in number and placed symmetrically about an axis of symmetry of the grille (10) formed by a diameter of the grille (10).

5. Motor vehicle, **characterized in that** it comprises a subassembly according to any one of the preceding claims, the subassembly being a subassembly providing the retention of the grille (10) on the cover (20) even during the deformation of the first portion of the latter during an impact with deployment of the safety airbag.

## Patentansprüche

1. Untereinheit zur Befestigung eines Gitters (10) eines Lautsprechers (30) einer Innenverkleidung an einem Kraftfahrzeug-Armaturenbrett, wobei die Untereinheit eine Wand (25) einer Abdeckung (20), die eine Aufnahme (21) für einen Lautsprecher (30) begrenzt, und ein die Aufnahme (21) bedeckendes Gitter (10) aufweist, das elastische Hauptbefestigungseinrichtungen (11) enthält, die an einem Ring (12a) am Umfang eines Gitterrosts (12) des Gitters (10) ausgebildet sind und mit der Wand (25) der Abdeckung (20) zusammenwirken, wobei die elastischen Hauptbefestigungseinrichtungen (11) mit mindestens einer Schulter (22) zusammenwirken, die am Umfang eines oberen Bereichs der Aufnahme (21) ausgebildet ist, wobei die Untereinheit sekundäre Halteeinrichtungen aufweist, die mindestens eine Einrastöffnung (24) enthalten, in die sich mindestens ein Einrast-Einsteckelement (13) einfügt, wobei die Einrast-Einsteckelemente (13) der sekundären Halteeinrichtungen eine Stange (13a) enthalten, an deren Ende ein elastischer Bereich (13b) ausgebildet ist, der beim Einführen des Einrast-Einsteckelements (13) in die Öffnung (24) umgebogen werden kann, **dadurch gekennzeichnet, dass** ein Strukturelement der Abdeckung (20) eine Bodenwand der Aufnahme (21) ist, und dass die mindestens eine Einrastöffnung (24) in der Bodenwand der Aufnahme (21) hergestellt ist, dass in einer normalen Nutzungsstellung die Endhaken (13b) der Einrast-Einsteckelemente (13) sich in Abstand zur Öffnung (24) unter dieser befinden, und dass in einer Arbeitsstellung der Einrast-Einsteckelemente (13), in der die elastischen Hauptbefestigungseinrichtungen (11) von der Wand (25) der Abdeckung (20) gelöst sind, die Endhaken (13b) mit der Bodenwand der Aufnahme (21) am Umfang der Öffnung (24) zusammenwirken.

2. Untereinheit nach Anspruch 1, **dadurch gekennzeichnet, dass** die Hauptbefestigungseinrichtungen (11) mit einem weichen Armaturenbrettbereich zusammenwirken und die sekundären Halteeinrichtungen mit einem harten Armaturenbrettbereich zusammenwirken.

3. Untereinheit nach einem der Ansprüche 1 oder 2, **dadurch gekennzeichnet, dass** die elastischen Hauptbefestigungseinrichtungen (11) Einklinkorgane sind, die sich im oberen Bereich der Aufnahme (21) festklammern.

4. Untereinheit nach einem der Ansprüche 1 bis 3, **dadurch gekennzeichnet, dass** die Einsteckelemente (13) und die Einrastöffnung (24) der sekundären Halteeinrichtungen in gerader Anzahl vorliegen und symmetrisch um eine Symmetrieachse des Gitters (10) herum angeordnet sind, die von einem Durchmesser des Gitters (10) gebildet wird.

5. Kraftfahrzeug, **dadurch gekennzeichnet, dass** es eine Untereinheit nach einem der vorhergehenden Ansprüche aufweist, wobei die Untereinheit eine Untereinheit ist, die den Halt des Gitters (10) auf der Abdeckung (20) selbst bei der Verformung des ersten Bereichs dieser letzteren bei einem Aufprall mit Entfalten des Airbags gewährleistet.
